# EUROPÄISCHE PATENTSCHRIFT

(11) **EP 3 898 434 B1**
(45) Veröffentlichungstag und Bekanntmachung des Hinweises auf die Patenterteilung: **17.07.2024**
(21) Anmeldenummer: 19809039.1
(22) Anmeldetag: 21.11.2019
(51) Int. Cl.: B65D 5/54, B65D 5/20

(54) **WISCHBLATTVERPACKUNGSVORRICHTUNG**
WIPER BLADE PACKAGING DEVICE
DISPOSITIF D'EMBALLAGE DE BALAI D'ESSUIE-GLACE

(30) Priorität: 19.12.2018 DE 102018222282
(43) Veröffentlichungstag der Anmeldung: 27.10.2021
(73) Patentinhaber: Robert Bosch GmbH, 70442 Stuttgart (DE)
(72) Erfinder: PUSCH, Simone, 76694 Forst (DE)
(86) Internationale Anmeldenummer: PCT/EP2019/082092
(87) Internationale Veröffentlichungsnummer: WO 2020/126294

(56) Entgegenhaltungen:
- DE-A1- 102012 210 885
- DE-A1- 102015 220 208
- US-A- 2 218 509
- US-A- 4 239 104
- US-A1- 2014 305 944
- US-B2- 10 099 807

## Beschreibung

### Stand der Technik

Es ist bereits eine Wischblattverpackungsvorrichtung mit zumindest einer Falteinheit, welche zumindest eine Umverpackung und zumindest zwei Stirnverpackungen aufweist, welche dazu vorgesehen sind in einem Gebrauchszustand einen Hohlraum zu einer Aufnahme wenigstens eines Wischblatts auszubilden, und die Umverpackung zumindest eine Faltachse aufweist, die parallel oder senkrecht zur Haupterstreckungsachse der Umverpackung verläuft und an welcher die Umverpackung gefaltet ist, vorgeschlagen worden.

Es ist bereits eine Verpackungsvorrichtung mit zumindest einer Falteinheit, welche zumindest eine Umverpackung und zumindest zwei Stirnverpackungen aufweist, welche dazu vorgesehen sind in einem Gebrauchszustand einen Hohlraum zu einer Aufnahme wenigstens eines Wischblatts auszubilden, und die Umverpackung zumindest eine Faltachse, die parallel oder senkrecht zur Haupterstreckungsachse der Umverpackung verläuft und an welcher die Falteinheit gefaltet ist, und die Umverpackung zumindest zwei Klebestreifen zu einer Fixierung der Falteinheit und zumindest ein Faltsegment, welches von zumindest zwei Aufreißperforationen eingegrenzt ist, umfasst, vorgeschlagen worden. Weiterhin ist eine Wischblattverpackungsvorrichtung mit den Merkmalen des Oberbegriffs aus der US 10 099 807 B2 bekannt. Weiterer Stand der Technik ist aus der US 2014/305944 A1 und der DE 10 2015 220208 A1 und der DE 10 2012 210885 A1 bekannt.

### Offenbarung der Erfindung

Die Erfindung betrifft eine Wischblattverpackungsvorrichtung gemäß Anspruch 1.

Die Wischblattverpackungsvorrichtung ist vorzugsweise zu einem Einsatz als Verpackung für ein Wischblatt, insbesondere für ein vormontiertes Wischblatt, vorgesehen. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise umfasst das Wischblatt zumindest eine Wischlippe, zumindest eine Wischleiste, zumindest eine Wischblattendkappe, und/oder zumindest einen Wischblattadapter. Bevorzugt ist die Wischlippe des Wischblatts durch die Wischblattverpackungsvorrichtung besonders geschützt verpackt. Vorzugsweise ist die Wischblattverpackungsvorrichtung an die Dimensionen des Wischblatts angepasst. Bevorzugt entspricht zumindest eine Abmessung der Wischblattverpackungsvorrichtung zumindest annähernd einer Dimension des Wischblatts. Insbesondere sind die Abmessungen des Wischblattverpackungsvorrichtung geringfügig größer als die Abmessungen des aufzunehmenden Wischblatts. Vorzugsweise ist eine Höhenerstreckung des Hohlraums der Wischblattverpackungsvorrichtung im Gebrauchszustand an eine Höhenerstreckung des Wischblatts angepasst. Vorzugsweise beträgt die Höhenerstreckung des Hohlraums der Wischblattverpackungsvorrichtung im Gebrauchszustand zumindest 10 mm, insbesondere zumindest 20 mm, bevorzugt zumindest 40 mm, alternativ zumindest 60 mm und in einer weiteren Alternative zumindest 70 mm. Vorzugsweise ist dabei eine Längenerstreckung des Hohlraums der Wischblattverpackungsvorrichtung im Gebrauchszustand an eine Längenerstreckung des Wischblatts angepasst. Vorzugsweise beträgt die Längenerstreckung des Hohlraums der Wischblattverpackungsvorrichtung im Gebrauchszustand zumindest 100 mm, insbesondere zumindest 200 mm, bevorzugt zumindest 400 mm, alternativ zumindest 600 mm und in einer weiteren Alternative zumindest 800 mm. Vorzugsweise ist dabei eine Tiefenerstreckung des Hohlraums der Wischblattverpackungsvorrichtung im Gebrauchszustand an eine Tiefenerstreckung des Wischblatts angepasst. Vorzugsweise beträgt die Tiefenerstreckung des Hohlraums der Wischblattverpackungsvorrichtung im Gebrauchszustand zumindest 10 mm, insbesondere zumindest 20 mm, bevorzugt zumindest 40 mm, alternativ zumindest 60 mm und in einer weiteren Alternative zumindest 70 mm. Vorzugsweise ist die Längenerstreckung des Hohlraums zumindest doppelt, bevorzugt zumindest dreimal, besonders bevorzugt zumindest sechsmal und ganz besonders bevorzugt zumindest achtmal, so groß wie die Tiefenerstreckung oder die Höhenerstreckung des Hohlraums. Vorteilhaft wird dadurch eine Bewegungsfreiheit des zumindest einen Wischblatts in der Verpackungseinheit eingeschränkt. Unter einer Längenerstreckung soll die maximale Erstreckung verstanden werden, welche ein Objekt entlang einer Richtung parallel zur Haupterstreckungsrichtung aufweist. Unter einer Höhenerstreckung eines Wischblatts soll die Erstreckung verstanden werden, welche ein Wischblatt entlang einer Richtung senkrecht zur Haupterstreckungsrichtung ausgehend von der Spitze der Wischlippe aufweist parallel zu einer Seite eines kleinsten Quaders, welcher das Wischblatt vollständig umschließt. Unter einer Tiefenerstreckung eines Wischblatts soll eine maximale Erstreckung verstanden werden, welche ein Wischblatt senkrecht zu seiner Längenerstreckung und senkrecht zu seiner Höhenerstreckung aufweist. Unter einer Haupterstreckungslänge soll die maximale Länge verstanden werden, welche ein Objekt entlang seiner Haupterstreckungsrichtung aufweist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Breite" eines Faltsegments soll vorzugsweise die Erstreckung des Faltsegments der Umverpackung senkrecht zur Haupterstreckungsrichtung verschieden von einer Dicke verstanden werden. Unter einer "Dicke" eines Faltsegments soll vorzugsweise die kleinste Erstreckung des Faltsegments der Umverpackung senkrecht zu seiner Haupterstreckungsrichtung verstanden werden.

Vorzugsweise ist die Wischblattverpackungsvorrichtung von einer Falteinheit gebildet. Bevorzugt ist die Falteinheit einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist die Falteinheit vollständig aus einem zusammenhängenden, insbesondere zugeschnittenen, Papier und/oder Karton, insbesondere doppelwelliger Wellpappe, hergestellt auf welchem Klebestreifen aufgebracht sind. Vorteilhaft wird dadurch eine Robustheit gegenüber äußeren Einwirkungen auf die Wischblattverpackungsvorrichtung erreicht. Vorteilhaft kann die Wischblattverpackungsvorrichtung bedruckbar ausgebildet werden. Vorteilhaft kann die Wischblattverpackungsvorrichtung recyclingfähig ausgebildet werden. Vorteilhaft kann eine materialsparende, insbesondere entsorgungsmaterialsparende, Wischblattverpackungsvorrichtung ausgebildet werden.

Vorzugsweise umfasst die Falteinheit zumindest eine Faltachse. Die Umverpackung umfasst vorteilhaft zumindest eine, vorzugsweise mehrere und besonders bevorzugt zumindest sechs, insbesondere genau sechs, Faltachse/n. Vorzugsweise verläuft die zumindest eine Faltachse parallel zur Haupterstreckungsrichtung der Umverpackung. Denkbar ist auch, dass die zumindest eine Faltachse senkrecht oder in einem Winkel kleiner 90° zur Haupterstreckungsrichtung der Umverpackung angeordnet ist. Vorzugsweise weist die Falteinheit eine Vielzahl von Faltachsen auf. Die Falteinheit ist in einem Gebrauchszustand vorzugsweise an der zumindest einen Faltachse gefaltet. Die Umverpackung ist im Gebrauchszustand vorzugsweise dazu vorgesehen eine äußere Begrenzung der Wischblattverpackungsvorrichtung zumindest entlang der Haupterstreckungsrichtung der Wischblattverpackungsvorrichtung auszubilden. Vorteilhaft wird dadurch ein Schutz des von der Umverpackung umgebenen Bereichs gegenüber äußeren Einwirkungen erreicht. Vorteilhaft bildet die Umverpackung in ihrem Inneren im Gebrauchszustand einen Hohlraum aus. Vorteilhaft ist die Umverpackung in einen Gebrauchszustand gefaltet. Die Umverpackung ist in einem Gebrauchszustand vorzugsweise an der zumindest einen Faltachse gefaltet. Vorteilhaft wird durch die zumindest eine Faltachse ein Falten der Umverpackung erleichtert. Vorteilhaft wird durch die zumindest eine Faltachse ein Falten der Umverpackung in den Gebrauchszustand erleichtert. Die Umverpackung ist insbesondere von einer quaderförmigen Außenhülle der Verpackungsvorrichtung gebildet.

Vorzugsweise umfasst die Falteinheit zumindest zwei, insbesondere genau zwei, Stirnverpackungen. Die Stirnverpackungen sind im Gebrauchszustand vorzugsweise dazu vorgesehen, eine äußere Begrenzung der Wischblattverpackungsvorrichtung auszubilden. Die Stirnverpackungen sind dazu vorgesehen die Öffnungen der Umverpackung an den Außenseiten, insbesondere an den Stirnseiten, der Umverpackung an den Endbereichen der maximalen Erstreckungen entlang der Haupterstreckungsachse der Umverpackung im Gebrauchszustand zu verschließen. Vorteilhaft wird dadurch eine Robustheit gegenüber äußeren Einwirkungen erreicht. Vorteilhaft bilden die Stirnverpackungen mit der Umverpackung im Gebrauchszustand einen Hohlraum aus. Die Stirnverpackungen umfassen jeweils zumindest eine, vorzugsweise drei, insbesondere genau drei, Faltachse/n. Vorteilhaft sind die Stirnverpackungen in einen Gebrauchszustand gefaltet. Die Stirnverpackungen sind in einem Gebrauchszustand vorzugsweise an der zumindest einen Faltachse gefaltet. Vorteilhaft wird durch die zumindest eine Faltachse ein Falten der Stirnverpackung erleichtert. Vorteilhaft wird durch die zumindest eine Faltachse ein Falten der Stirnverpackungen in den Gebrauchszustand erleichtert. Vorzugsweise umfassen die Stirnverpackungen zusammen zumindest sechs, insbesondere genau sechs, Stirnverpackungssegmente. Vorzugsweise sind die Stirnverpackungen durch Faltachsen, besonders bevorzugt je Stirnverpackung jeweils drei Faltachsen, in die zumindest sechs Stirnverpackungssegmente unterteilt. Vorzugsweise sind die Stirnverpackungssegmente an den Endbereichen der maximalen Erstreckungen entlang der Haupterstreckungsachse der Umverpackung angeordnet. Vorzugsweise sind die Stirnverpackungssegmente durch zumindest zwei Faltachsen von der Umverpackung getrennt ausgebildet. Vorzugsweise sind die Faltachsen, welche die Stirnverpackungssegmente von der Umverpackung trennen senkrecht zu der Haupterstreckungsachse der Umverpackung ausgebildet. Vorzugsweise sind zumindest drei, insbesondere genau vier, Stirnverpackungssegmente an jedem Endbereich der maximalen Erstreckung der Umverpackung angeordnet. Vorzugsweise ist zumindest ein, insbesondere genau ein, Stirnverpackungssegment mit der Umverpackung verbunden ausgebildet. Vorzugsweise ist ein mittig angeordnetes Stirnverpackungssegment mit der Umverpackung verbunden, insbesondere einstückig, ausgebildet. Vorzugsweise sind zumindest sechs Stirnverpackungssegmente, welche an der Umverpackung angeordnet sind, im Wesentlichen quaderförmig ausgebildet. Unter "im Wesentlichen quaderförmig" soll verstanden werden, dass ein Objekt mit einem kleinsten Quader der das Objekt vollständig einschließt eine kleinere Volumendifferenz aufweist als mit einer kleinsten Kugel, einer kleinsten Pyramide oder einem kleinsten Zylinder. Vorzugsweise sind zwei Stirnverpackungsendsegmente im Rohzustand an einem Stirnverpackungssegment angeordnet und durch das Stirnverpackungssegment getrennt von der Umverpackung ausgebildet. Vorzugsweise sind die Stirnverpackungsendsegmente mit unterschiedlich langen Kantenlängen senkrecht zur Hauptersteckungsrichtung der Umverpackung ausgebildet. Vorzugsweise ist die im Rohzustand der Umverpackung abgewandte Kantenlänge kürzer ausgebildet als die der Umverpackung zugewandte Kantenlänge. Vorteilhaft sind die Stirnverpackungen materialsparend zum Verschluss der Umverpackung im Gebrauchszustand ausgebildet. Vorteilhaft ist die Stirnverpackung intuitiv faltbar ausgebildet. Unter einem Rohzustand soll ein Zustand verstanden werden, in welchem ein Objekt ist, bevor es in einen Gebrauchszustand überführt wurde. Bevorzugt soll unter einem Rohzustand ein Zustand verstanden werden, in welchem sich die Falteinheit vor einem Falten befindet. Bevorzugt soll unter einem Gebrauchszustand ein Zustand verstanden werden, in welchem sich die Falteinheit nach einem Falten befindet. Die Abmessung der kleinsten räumlichen Ausdehnung, insbesondere der Dicke, der Falteinheit, der Umverpackung und der Stirnverpackungen, beträgt vorzugsweise zumindest 0,001 mm, besonders bevorzugt 0,1 mm und ganz besonders bevorzugt zumindest 0,5 mm.

Vorzugsweise umfasst die Umverpackung zumindest ein erstes Faltsegment. Vorzugsweise umfasst die Umverpackung zumindest ein weiteres Faltsegment. Vorzugsweise sind das zumindest eine erste Faltsegment und das zumindest eine weitere Faltsegment durch zumindest eine Faltachse voneinander getrennt ausgebildet. Vorzugsweise umfasst die Umverpackung zumindest sieben, insbesondere genau sieben, Faltsegmente. Vorzugsweise sind drei Faltsegmente der Umverpackung im Rohzustand an der Stirnverpackung angeordnet. Vorzugsweise weisen die drei Faltsegmente einen im Wesentlichen kontaktierenden Bereich mit zumindest einer Stirnverpackung auf. Unter einem "im Wesentlichen kontaktierenden Bereich" soll ein Bereich verstanden werden, in welchem zwei Objekte bis auf einen Abstand von maximal 3 mm, bevorzugt maximal 1 mm, aneinander angrenzen. Vorzugsweise ist der im Wesentlichen kontaktierenden Bereich mit zumindest einer Stirnverpackung der drei Faltsegmente an einem Endbereich einer maximalen Erstreckung entlang der Haupterstreckungsachse der Umverpackung angeordnet. Vorzugsweise ist der im Wesentlichen kontaktierende Bereich mit zumindest einer Stirnverpackung der mittleren der drei Faltsegmente als Faltachse ausgebildet. Vorzugsweise sind die drei Faltsegmente mit einem im Wesentlichen kontaktierenden Bereich mit zumindest einem Stirnverpackungssegment im Wesentlichen quaderförmig ausgebildet. Vorzugsweise sind an den drei Faltsegmenten der Umverpackung mit einem im Wesentlichen kontaktierenden Bereich mit zumindest einem Stirnverpackungssegment vier weitere Faltsegmente der Umverpackung angeordnet. Vorzugsweise sind die vier Faltsegmente, welche an den drei Faltsegmenten mit einem im Wesentlichen kontaktierenden Bereich mit der zumindest einen Stirnverpackung angeordnet sind, auf einer Seite senkrecht zur Haupterstreckungsachse der Umverpackung an einem der drei Faltsegmente der Umverpackung angeordnet, welche an die drei Faltsegmente mit einem im Wesentlichen kontaktierenden Bereich mit zumindest einer Stirnverpackung grenzen. Vorzugsweise bilden die vier Faltsegmente, welche an den drei Faltsegmenten mit einem im Wesentlichen kontaktierenden Bereich mit zumindest einer Stirnverpackung angeordnet sind, einen wesentlichen Abstand mit einer Stirnverpackung aus. Unter einem "wesentlichen Abstand" soll vorzugsweise ein Abstand größer als 5 mm, bevorzugt 20 mm und besonders bevorzugt größer als 30 mm verstanden werden. Vorzugsweise weist nur ein Faltsegment der drei Faltsegmente, welche einen im Wesentlichen kontaktierenden Bereich mit zumindest einer Stirnverpackung aufweisen, einen im Wesentlichen kontaktierenden Bereich mit nur einem Faltsegment, der vier Faltsegmente auf, welche im Rohzustand der Falteinheit einen wesentlichen Abstand mit der Stirnverpackung ausbilden. Vorzugsweise umfasst die Umverpackung ein Endfaltsegment, welches an zumindest einer Seite senkrecht zur Haupterstreckungsrichtung eine äußere Begrenzung der Umverpackung ausbildet.

Vorzugsweise ist zumindest ein Faltsegment der vier Faltsegmente der Umverpackung, welche im Rohzustand der Falteinheit einen wesentlichen Abstand mit der Stirnverpackung ausbilden, von zumindest zwei Aufreißperforationen eingegrenzt. Unter einer Aufreißperforation soll eine Perforation, insbesondere strukturierte und/oder regelmäßige Perforation, verstanden werden.

Vorzugsweise sind die Klebestreifen dazu vorgesehen, die Falteinheit in einem Gebrauchszustand zu fixieren. Vorzugsweise sind die Klebestreifen dazu vorgesehen, die Wischblattverpackungsvorrichtung zu verschließen. Die Klebestreifen weisen vorzugsweise eine im Wesentlichen quaderförmige Außenkontur auf. Denkbar ist auch, dass die Klebestreifen eine beliebige Form, wie insbesondere mit ovalen und/oder wellenförmigen und/oder zick-zack Muster und/oder dreieckigen Außenkontur auch in beliebiger Kombination aufweisen. Vorzugsweise weisen die Klebestreifen eine einheitliche Dicke auf. Alternativ ist denkbar, dass die Klebestreifen eine uneinheitliche, wie etwa durch inhomogene Klebestoffverteilung hervorgerufene, Dicke aufweisen. Es ist ebenfalls denkbar, dass die Klebestreifen eine Dicke aufweisen, die sich periodisch wiederholende Werte annimmt. Vorzugsweise ist genau ein Klebestreifen zu einem Fixieren der Wischblattverpackungsvorrichtung zu einem ersten Versand vorgesehen. Der nicht zum ersten Versand verwendete Klebestreifen ist zu einem Wiederverschließen der Wischblattverpackungsvorrichtung nach einem ersten Verschließen und Öffnen der Wischblattverpackungsvorrichtung, insbesondere bei einem Rückversand, vorgesehen.

Durch die erfindungsgemäße Ausgestaltung der Wischblattverpackungsvorrichtung kann vorteilhaft eine Wischblattverpackungsvorrichtung bereitgestellt werden, welche unkompliziert aus einer einstückigen Falteinheit in einen Gebrauchszustand zur Aufnahme eines Wischblatts gefaltet werden kann. Es wird eine Wischblattverpackungsvorrichtung ausgebildet, welche eine hohe Robustheit und umgreifenden Schutz für ein Wischblatt ermöglicht. Durch die Einfachheit des Aufbaus der Wischblattverpackungsvorrichtung und die hohe Sicherheit des Wischblatts in der Wischblattverpackungsvorrichtung eignet sich die Wischblattverpackungsvorrichtung vorteilhaft für eine Mehrfachverwendung. Vorteilhaft wird dadurch erreicht, dass das Wischblatt besonders geschützt verpackt ist. Vorteilhaft wird eine Wiederverpackung und damit ein Rückversand der Wischblattverpackungsvorrichtung für einen Kunden vorbereitet ausgebildet.

Erfindungsgemäß wird vorgeschlagen, dass die eine Umverpackung zumindest zwei Faltsegmente umfasst, und die zumindest zwei Klebestreifen auf unterschiedlichen Faltsegmenten der Umverpackung angeordnet sind und die zumindest zwei Klebestreifen im Gebrauchszustand der Falteinheit auf verschiedenen Seiten der Umverpackung angeordnet sind. Vorzugsweise sind die zumindest zwei Klebestreifen auf verschiedenen Faltsegmenten angeordnet. Bevorzugt sind die Klebestreifen auf einer Innenseite der Faltsegmente angeordnet. Vorzugsweise sind die zumindest zwei Klebestreifen auf verschiedenen Faltsegmenten, der vier Faltsegmente, welche im Rohzustand der Falteinheit einen wesentlichen Abstand mit der Stirnverpackung ausbilden, angeordnet. Vorzugsweise erstrecken sich die Klebestreifen im Wesentlichen über die gesamte Haupterstreckungslänge der Umverpackung. Vorzugsweise bildet die Umverpackung im Gebrauchszustand eine im Wesentlichen quaderförmige Struktur aus. Vorzugsweise bildet die Umverpackung die Seiten der im Wesentlichen quaderförmigen Struktur aus, welche sich entlang der Haupterstreckungsachse der im Wesentlichen quaderförmigen Struktur erstrecken. Vorzugsweise bilden vier Faltsegmente der Umverpackung eine innere Umrandung aus. Vorzugsweise bilden vier Faltsegmente, welche im Rohzustand auf der den Stirnverpackungen zugewandten Seite der Umverpackung angeordnet sind, im Gebrauchszustand eine im Wesentlichen quaderförmige Struktur aus. Vorzugsweise bilden drei Faltsegmente der Umverpackung eine Fixierungseinheit aus. Vorzugsweise bilden drei Faltsegmente, welche im Rohzustand auf der den Stirnverpackungen abgewandten Seite der Umverpackung angeordnet sind, im Gebrauchszustand eine Fixiereinheit aus, welche um die innere Umrandung angeordnet, insbesondere gefaltet ist. Vorzugsweise sind die Klebestreifen auf der Fixiereinheit, insbesondere einer im Gebrauchszustand innenliegenden Seite der Fixiereinheit, angeordnet. Vorzugsweise sind die Klebestreifen im Gebrauchszustand auf verschiedenen Seiten der im Wesentlichen quaderförmigen inneren Struktur angeordnet. Vorzugsweise ist ein Klebestreifen im Gebrauchszustand an einer Seite angeordnet, welche von einer Ebene vollständig geschnitten wird, die senkrecht zu einer Ebene angeordnet ist, welche die Seite mit dem zweiten Klebestreifen vollständig schneidet. Die Klebestreifen sind insbesondere von einem doppelseitigen Klebeband gebildet. Grundsätzlich wäre jedoch auch eine andere, einem Fachmann als sinnvoll erscheinende Ausgestaltung denkbar. Vorzugsweise ist in zumindest einem Gebrauchszustand eines der Klebebänder, insbesondere mittels einer abziehbaren Folie abgedeckt um ein ankleben zu vermeiden. Vorteilhaft wird dadurch ein Fixieren der Wischblattverpackungsvorrichtung erleichtert. Vorteilhaft wird ein Wiederfixieren der Wischblattverpackungsvorrichtung ermöglicht. Vorteilhaft wird ein Wiederfixieren der Wischblattverpackungsvorrichtung erleichtert.

Des Weiteren wird vorgeschlagen, dass das Faltsegment, welches von zumindest zwei Aufreißperforationen eingegrenzt ist, eine Haupterstreckungslänge aufweist, die größer ist als die Berührungskante mit den angrenzenden Faltsegmenten parallel zur Haupterstreckungsachse, und zumindest teilweise abgerundete Außenkanten aufweist. Vorteilhaft wird ein Faltsegment ausgebildet, welches eine benutzerfreundliche, insbesondere intuitive, Handhabung der Aufreißperforation ermöglicht. Vorzugsweise sind die Berührungskanten des Faltsegments, welches von zumindest zwei Aufreißperforationen eingegrenzt ist, als die zwei Aufreißperforationen ausgebildet. Unter einer Berührungskante soll in diesem Zusammenhang die Grenze zwischen zwei benachbarten Faltsegmenten verstanden werden. Unter einer "teilweise abgerundeten Außenkante" soll eine Kante verstanden werden, die zumindest eine von einem Winkel abweichende Krümmung aufweist.

Des Weiteren wird vorgeschlagen, dass zumindest eine Aufreißperforation zusätzlich als Faltachse der Umverpackung ausgebildet ist. Vorzugsweise ist die eine Aufreißperforation, welche zusätzlich als Faltachse der Umverpackung ausgebildet ist, auf der Umverpackung angeordnet. Vorzugsweise ist die eine Aufreißperforation, welche zusätzlich als Faltachse der Umverpackung ausgebildet ist, im Rohzustand zwischen dem zweiten Faltsegment und dem dritten Faltsegment auf einer der Stirnverpackung abgewandten Seite der Umverpackung von einer äußeren Kante senkrecht zur Haupterstreckungsachse der Umverpackung aus, an der Umverpackung angeordnet. Vorzugsweise ist die eine Aufreißperforation, welche zusätzlich als Faltachse der Umverpackung ausgebildet ist, an der Fixiereinheit angeordnet. Vorteilhaft wird erreicht, dass die Fixiereinheit die innere Umrandung der Umverpackung umgreifen kann. Vorteilhaft wird erreicht, dass die Fixiereinheit ein leichtgängiges, intuitives Aufreißen an den Aufreißperforationen ermöglicht.

Des Weiteren wird vorgeschlagen, dass die zumindest eine Faltachse, welche zusätzlich als Aufreißperforation ausgebildet ist, zwischen den Klebestreifen an der Umverpackung angeordnet ist. Vorteilhaft wird erreicht, dass die Aufreißperforation ein leichtgängiges, intuitives Aufreißen an den Aufreißperforationen ermöglicht. Vorzugsweise ist die eine Faltachse, welche zusätzlich als Aufreißperforation ausgebildet ist, im Rohzustand der Umverpackung zwischen den Klebestreifen an der Umverpackung angeordnet. Vorzugsweise soll unter "zwischen zwei Teilobjekten der Falteinheit" verstanden werden, dass ein Element einen Berührungspunkt aufweist mit zumindest einer kürzesten Verbindungslinie, welche die zwei Objekte entlang einer materiellen Ausdehnung der Falteinheit verbindet.

Des Weiteren wird vorgeschlagen, dass die Faltsegmente, welche einen Klebestreifen aufweisen, Kantenlängen parallel zu ihrer Haupterstreckungsachse aufweisen, welche unterschiedlich lang sind. Vorteilhaft wird ein Faltsegment ausgebildet, welches im Rohzustand zwischen den Faltsegmenten angeordnet ist, welche unterschiedlich lange Kantenlängen entlang ihrer Haupterstreckungsachse aufweisen. Vorzugsweise ist das Faltsegment, welches von Aufreißperforationen eingegrenzt wird zwischen den Faltsegmenten angeordnet, welche unterschiedlich lange Kantenlängen entlang ihrer Haupterstreckungsachse aufweisen. Vorteilhaft wird eine leicht benutzbare Aufreißperforation ausgebildet. Denkbar ist auch, dass die Faltsegmente, welche einen Klebestreifen aufweisen, Kantenlängen parallel zur Haupterstreckungsachse aufweisen, welche gleich lang sind. Es ist ebenfalls denkbar, dass die Kanten zusätzliche Strukturierungen, insbesondere Greifstrukturierungen, aufweisen. Unter einer Greifstrukturierung soll vorzugsweise eine Strukturierung verstanden werden, welche das Greifen des Elementes erleichtert. Denkbar sind in diesem Zusammenhang beispielsweise Beschichtungen oder Kantenschliffe.

Des Weiteren wird vorgeschlagen, dass ein Klebestreifen auf einem Endfaltsegment angeordnet ist. Vorzugsweise ist das Endfaltsegment an zumindest einer Seite senkrecht zur Haupterstreckungsrichtung an einer äußeren Begrenzung der Umverpackung ausbildet. Vorteilhaft wird erreicht, dass bei einem Öffnen der Wischblattverpackungsvorrichtung lediglich ein Endsegment als Abfall anfällt. Vorteilhaft wird eine umweltschonende Wischblattverpackungsvorrichtung ausgebildet.

Des Weiteren wird vorgeschlagen, dass die Faltsegmente, welche einen Klebestreifen aufweisen, abgeschrägte Teilkanten aufweisen. Vorteilhaft wird erreicht, dass die Aufreißperforation ein leichtgängiges, intuitives Aufreißen der Wischblattverpackungsvorrichtung in einem Gebrauchszustand an den Aufreißperforationen ermöglicht.

Des Weiteren wird ein Verpackungssystem mit einer erfindungsgemäßen Wischblattverpackungsvorrichtung und zumindest einem Wischblatt, welches in der Falteinheit der Wischblattverpackungsvorrichtung gelagert ist, vorgeschlagen. Vorzugsweise umfasst das Wischblatt zumindest eine Wischlippe, zumindest eine Wischleiste, zumindest eine Wischblattendkappe, zumindest eine Windabweisereinheit und/oder zumindest einen Wischblattadapter.

Des Weiteren wird vorgeschlagen, dass das zumindest eine Wischblatt zu einer Lagerung in dem Hohlraum in zumindest einem Streckelement angeordnet ist, welches dazu vorgesehen ist das Wischblatt zu strecken. Vorzugsweise ist das zumindest eine Streckelement aus einem Kartonmaterial wie etwa Pappe oder Papier, insbesondere doppelwelliger Wellpappe, ausgebildet. Vorzugsweise bildet das zumindest eine Streckelement zumindest eine ebene Fläche aus, an welcher ein Wischblatt parallel gelagert werden kann. Vorzugsweise streckt das zumindest eine Streckelement zumindest eine Federschiene auf eine maximale Haupterstreckungslänge der Federschiene.

Die erfindungsgemäße Wischblattverpackungsvorrichtung soll hierbei nicht auf die oben beschriebene Anwendung und Ausführungsform beschränkt sein. Insbesondere kann die erfindungsgemäße Wischblattverpackungsvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattverpackungsvorrichtung im Rohzustand,
- Fig. 2: die erfindungsgemäße Wischblattverpackungsvorrichtung im Gebrauchszustand und
- Fig. 3: ein Verpackungssystem mit der erfindungsgemäßen Wischblattverpackungsvorrichtung, mit einem Wischblatt und mit einem Streckelement.

### Beschreibung des Ausführungsbeispiels

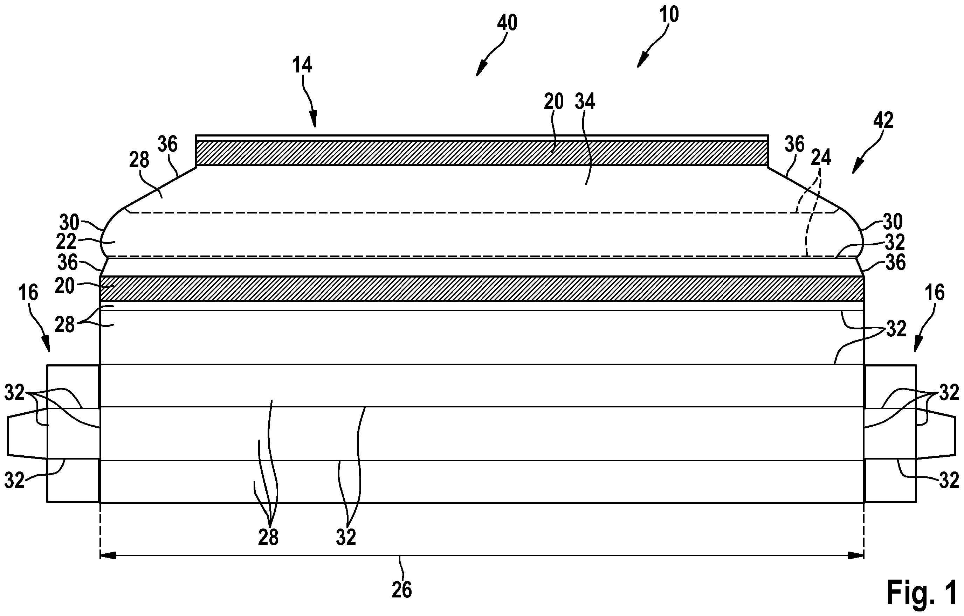

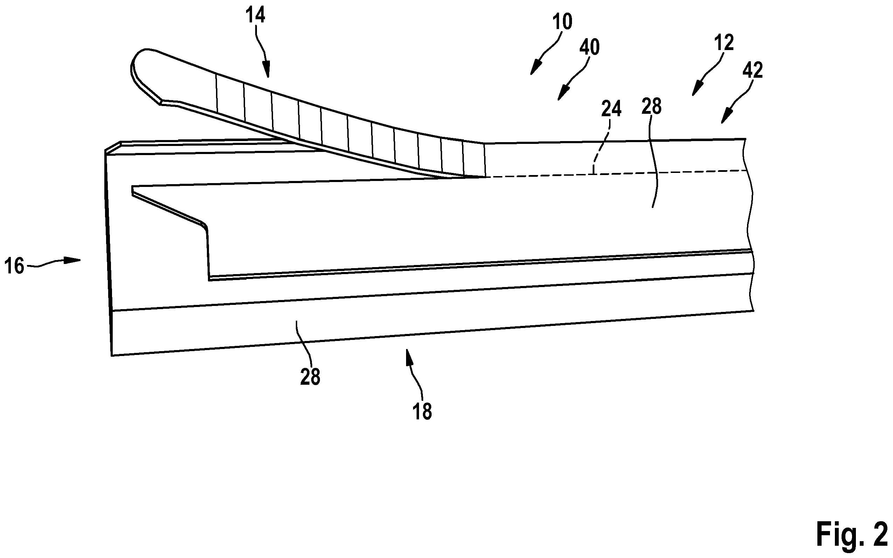

In Figur 1 ist eine Falteinheit 12 einer erfindungsgemäßen Wischblattverpackungsvorrichtung 10 im Rohzustand abgebildet. Die Falteinheit 12 weist eine Umverpackung 14 auf. Die Falteinheit 12 weist zwei Stirnverpackungen 16 auf. Die Umverpackung 14 und die Stirnverpackungen 16 sind einstückig ausgebildet. In einem Gebrauchszustand (siehe Fig. 2) bilden die Umverpackung 14 und die zwei Stirnverpackungen 16 der Falteinheit 12 einen Hohlraum 18 zu einer Aufnahme wenigstens eines Wischblatts 50 aus. Die Falteinheit ist aus einem Kartonmaterial wie etwa Pappe oder Papier, insbesondere doppelwelliger Wellpappe, ausgebildet.

Die Umverpackung 14 weist zwei Klebestreifen 20 zu einer Fixierung der Falteinheit 12 auf. Die Umverpackung 14 umfasst sieben Faltsegmente 28. Die Umverpackung 14 weist ein Faltsegment 22 auf, welches von zwei Aufreißperforationen 24 eingegrenzt ist. Eine Haupterstreckungslänge 26 der Falteinheit 12 ist im Gebrauchszustand (Fig. 2) wesentlich länger als jede Erstreckung der Falteinheit 12 senkrecht zu der Haupterstreckungsrichtung der Falteinheit 12. Die Aufreißperforationen 24 erstrecken sich im Wesentlichen über die gesamte Haupterstreckungslänge 26 der Falteinheit 14. Die zwei Klebestreifen 20 sind auf unterschiedlichen Faltsegmenten 28 der Umverpackung 14 angeordnet. Die zwei Klebestreifen 20 sind im Gebrauchszustand der Falteinheit 12 auf verschiedenen Seiten der Umverpackung 14 angeordnet (siehe Fig. 2). Die zwei Klebestreifen 20 sind im Gebrauchszustand der Falteinheit 12 auf verschiedenen Faltsegmenten, welche nicht benachbart sind, der Umverpackung 14 auf den im Gebrauchszustand innenliegenden Seiten angeordnet (siehe Fig. 2). Das Faltsegment 22, welches von zumindest zwei Aufreißperforationen 24 eingegrenzt ist, weist eine Haupterstreckungslänge auf, die größer ist als die Berührungskante mit den angrenzenden Faltsegmenten 28 parallel zur Haupterstreckungsachse. Das Faltsegment 22, welches von zumindest zwei Aufreißperforationen 24 eingegrenzt ist, weist teilweise abgerundete Außenkanten 30 auf. Die Umverpackung 14 umfasst zumindest eine Faltachse 32. Eine Aufreißperforation 24 der Umverpackung 14 ist zusätzlich als Faltachse 32 der Umverpackung 14 ausgebildet. Die Faltachse 32 welche zusätzlich als Aufreißperoration 24 ausgebildet ist, ist zwischen den Klebestreifen 20 an der Umverpackung 14 ausgebildet (Fig. 1).

Die Faltsegmente 28, welche einen Klebestreifen 20 aufweisen, weisen Kantenlängen parallel zur Haupterstreckungsachse auf, welche unterschiedlich lang sind. Ein Klebestreifen 20 ist auf einem Endfaltsegment 34 der Umverpackung 14 angeordnet. Die Faltsegmente 28, welche einen Klebestreifen 20 aufweisen, weisen abgeschrägte Teilkanten 36 auf.

Die Wischblattverpackungsvorrichtung 10 ist zum Verpacken und Verschicken zumindest eines Wischblatts 50 vorgesehen. Zum Verpacken eines Wischblatts 50 werden die Stirnverpackungen 16 an ihren Faltachsen 32 in eine Richtung gefaltet. Anschließend wird die Umverpackung 14 entlang ihrer Faltachse 32 in dieselbe Richtung gefaltet und bildet einen Hohlraum 18 mit den gefalteten Stirnverpackungen 16 aus (vgl. Fig. 2). Die Faltsegmente 28 mit den Klebestreifen 20 und/oder die Faltsegmente 22 welche an Aufreißperforationen angrenzen, bilden die Fixiereinheit 42 aus. Ein Klebestreifen 20 dient zu einem Fixieren der Wischblattverpackungsvorrichtung 10 zu einem ersten Versand. Der nicht benutzte Klebestreifen 20 dient zu einem Wiederverschließen der Wischblattverpackungsvorrichtung 10 nach einem ersten Verschließen und Öffnen der Wischblattverpackungsvorrichtung 10, insbesondere zu einem Rückversand. Nach einem Versand kann das Faltsegment 22, welches von Aufreißperforationen 24 eingegrenzt ist, zum Öffnen der Wischblattverpackungsvorrichtung 10 verwendet werden. Der unbenutzte Klebestreifen 20 ist so angeordnet, dass er zu einem Wiederverschließen der Wischblattverpackungsvorrichtung 10 verwendet werden kann. Für einen Kunden fällt bei einem Rückversand lediglich das Faltsegment 22, welches im Rohzustand zwischen der Aufreißperforationen 24 angeordnet ist, als ein Müll an.

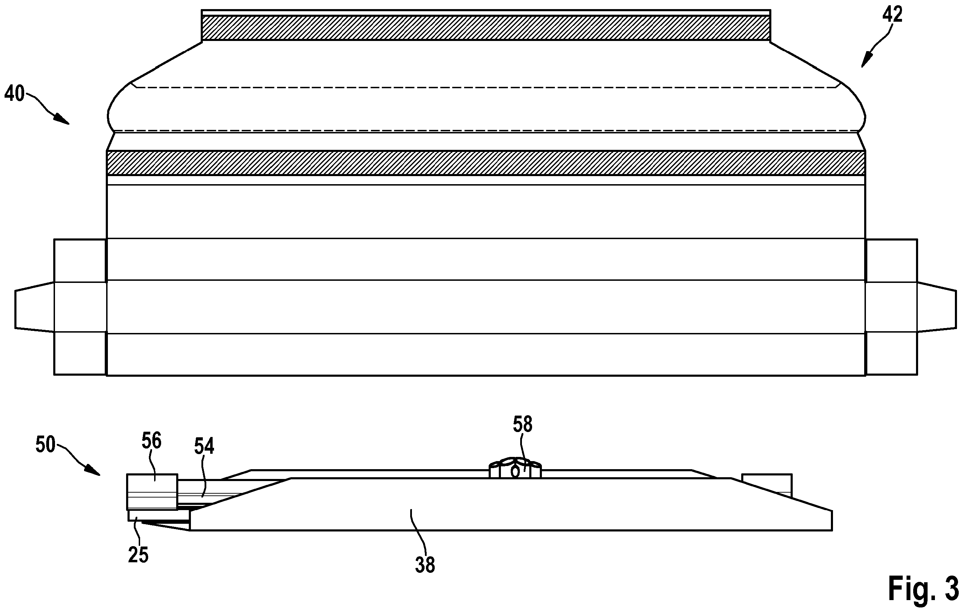

Figur 3 zeigt ein Verpackungssystem 40. Das Verpackungssystem 40 weist die Wischblattverpackungsvorrichtung 10 auf. Die Wischblattverpackungsvorrichtung 10 ist in der Figur 3 in einem teilweise gefalteten Zustand dargestellt. Ferner weist das Verpackungssystem 40 ein Streckelement 38 auf, welches dazu vorgesehen ist ein Wischblatt 50 zu einer Lagerung in der Falteinheit 12 zu strecken. Das zumindest eine Streckelement 38 ist aus einem Kartonmaterial und/oder Faserstoffmaterial wie etwa Pappe oder Papier, insbesondere doppelwelliger Wellpappe, ausgebildet. Das zumindest eine Streckelement 38 bildet eine ebene Fläche aus, an welcher ein Wischblatt 50 parallel gelagert werden kann. Das zumindest eine Streckelement 38 streckt mit der ebenen Fläche zumindest eine Federschiene auf eine maximale Haupterstreckungslänge der Federschiene. Das Wischblatt 50 liegt zu einer Lagerung in der Wischblattverpackungsvorrichtung an der ebenen Fläche an dem Streckelement 38 an. Das Streckelement 38 streckt das Wischblatt, sodass eine maximale Erstreckungslänge der Federschiene erreicht ist. Durch das Streckelement 38 ist das Wischblatt 50 zusätzlich geschützt in einer Wischblattverpackungsvorrichtung 10 gelagert. Die Wischblattverpackungsvorrichtung 10 ist dazu vorgesehen jeweils zwei Wischblätter 50 in jeweils einem Streckelement 38 aufzunehmen. Das Wischblatt in Figur 3 umfasst eine Wischlippe 52, eine Wischleiste 54, eine Wischblattendkappe 56 und einen Wischblattadapter 58.

## Patentansprüche

1. Wischblattverpackungsvorrichtung (10) mit zumindest einer Falteinheit (12), welche zumindest eine Umverpackung (14) und zumindest zwei Stirnverpackungen (16) aufweist, welche dazu vorgesehen sind in einem Gebrauchszustand einen Hohlraum (18) zu einer Aufnahme wenigstens eines Wischblatts (50) auszubilden, **wobei** die Umverpackung (14) zumindest zwei Klebestreifen (20) zu einer Fixierung der Falteinheit (12) und zumindest ein Faltsegment (22) aufweist, welches von zumindest zwei Aufreißperforationen (24) eingegrenzt ist, und die Haupterstreckungslänge (26) der Falteinheit (12) im Gebrauchszustand wesentlich größer ist als jede Erstreckung der Falteinheit (12) senkrecht zu der Haupterstreckungsrichtung und die Aufreißperforationen (24) sich zumindest im Wesentlichen über die gesamte Haupterstreckungslänge (26) der Falteinheit (12) erstrecken,
wobei die Umverpackung (14) zumindest zwei Faltsegmente (28) umfasst, **dadurch gekennzeichnet, dass** die zumindest zwei Klebestreifen (20) auf unterschiedlichen Faltsegmenten (28) der Umverpackung (14) angeordnet sind und die zumindest zwei Klebestreifen (20) im Gebrauchszustand der Falteinheit (12) auf verschiedenen Seiten der Umverpackung (14) angeordnet sind.

2. Wischblattverpackungsvorrichtung (10) nach Anspruch 1, **dadurch gekennzeichnet, dass** das Faltsegment (22), welches von zumindest zwei Aufreißperforationen (24) eingegrenzt ist, eine Haupterstreckungslänge (26), die größer ist als die Berührungskante mit den angrenzenden Faltsegmenten (28) parallel zur Haupterstreckungsachse, und zumindest teilweise abgerundete Außenkanten (30) aufweist.

3. Wischblattverpackungsvorrichtung (10) nach einem der vorhergehenden Ansprüche, **dadurch gekennzeichnet, dass** zumindest eine Aufreißperforation (24) zusätzlich als Faltachse (32) der Umverpackung (14) ausgebildet ist.

4. Wischblattverpackungsvorrichtung (10) nach Anspruch 3, **dadurch gekennzeichnet, dass** die zumindest eine Faltachse (32), welche zusätzlich als Aufreißperforation (24) ausgebildet ist, zwischen den Klebestreifen (20) an der Umverpackung (14) angeordnet ist.

5. Wischblattverpackungsvorrichtung (10) nach Anspruch 1, **dadurch gekennzeichnet, dass** die Faltsegmente (28), welche einen Klebestreifen (20) aufweisen, Kantenlängen parallel zur Haupterstreckungsachse aufweisen, welche unterschiedlich lang sind.

6. Wischblattverpackungsvorrichtung (10) nach Anspruch 1, **dadurch gekennzeichnet, dass** ein Klebestreifen (20) auf einem Endfaltsegment (34) angeordnet ist.

7. Wischblattverpackungsvorrichtung (10) nach Anspruch 1 **dadurch gekennzeichnet, dass** die Faltsegmente (28), welche einen Klebestreifen (20) aufweisen, abgeschrägte Teilkanten (36) aufweisen.

8. Verpackungssystem (40) mit einer Wischblattverpackungsvorrichtung (10) nach einem der vorhergehenden Ansprüche und mit zumindest einem Wischblatt (50), welches im Gebrauchszustand der Falteinheit (12) in der Falteinheit (12) gelagert ist.

9. Verpackungssystem (40) mit einer Wischblattverpackungsvorrichtung (10) nach Anspruch 9 und mit zumindest einem Streckelement (38), welches dazu vorgesehen ist das Wischblatt (50) zu einer Lagerung in der Falteinheit (12) zu strecken.

## Claims

1. Wiper blade packaging device (10) having at least one folding unit (12) which has at least one outer packaging (14) and at least two end packagings (16), which are provided, in a use state, to form a cavity (18) for receiving at least one wiper blade (50), wherein the outer packaging (14) has at least two adhesive strips (20) for fixing the folding unit (12) and at least one folding segment (22), which is bounded by at least two tear-off perforations (24), and the main length of extent (26) of the folding unit (12) in the use state is substantially larger than each extent of the folding unit (12) perpendicularly to the main direction of extent, and the tear-off perforations (24) extend at least substantially over the entire main length of extent (26) of the folding unit (12),
wherein the outer packaging (14) comprises at least two folding segments (28), **characterized in that** the at least two adhesive strips (20) are arranged on different folding segments (28) of the outer packaging (14), and, in the use state of the folding unit (12), the at least two adhesive strips (20) are arranged on different sides of the outer packaging (14).

2. Wiper blade packaging device (10) according to Claim 1, **characterized in** the folding segment (22), which is bounded by at least two tear-off perforations (24), has a main length of extent (26), which is larger than the contact edge with the adjacent folding segments (28) parallel to the main axis of extent, and at least partially rounded outer edges (30).

3. Wiper blade packaging device (10) according to either of the preceding claims, **characterized in that** at least one tear-off perforation (24) is additionally formed as a folding axis (32) of the outer packaging (14) .

4. Wiper blade packaging device (10) according to Claim 3, **characterized in that** the at least one folding axis (32), which is additionally designed as a tear-off perforation (24), is arranged between the adhesive strips (20) on the outer packaging (14).

5. Wiper blade packaging device (10) according to Claim 1, **characterized in that** the folding segments (28), which have an adhesive strip (20), have edge lengths parallel to the main axis of extent that differ in length.

6. Wiper blade packaging device (10) according to Claim 1, **characterized in that** an adhesive strip (20) is arranged on an end folding segment (34).

7. Wiper blade packaging device (10) according to Claim 1, **characterized in that** the folding segments (28), which have an adhesive strip (20), have bevelled partial edges (36) .

8. Packaging system (40) having a wiper blade packaging device (10) according to one of the preceding claims and having at least one wiper blade (50) which, in the use state of the folding unit (12), is mounted in the folding unit (12).

9. Packaging system (40) having a wiper blade packaging device (10) according to Claim 9 and having at least one stretch element (38), which is provided to stretch the wiper blade (50) for mounting in the folding unit (12).

## Revendications

1. Dispositif (10) d'emballage de balai d'essuie-glace comprenant au moins une unité pliable (12), qui présente au moins un emballage extérieur (14) et au moins deux emballages d'extrémité (16), destinés, dans un état d'utilisation, à former un espace creux (18) pour recevoir au moins un balai d'essuie-glace (50), l'emballage extérieur (14) présentant au moins deux bandes adhésives (20) pour une fixation de l'unité pliable (12) et au moins un segment pliable (22), qui est délimité par au moins deux perforations de déchirure (24), et la longueur d'extension principale (26) de l'unité pliable (12) étant, à l'état d'utilisation, sensiblement plus grande que toute extension de l'unité pliable (12) perpendiculairement à la direction d'extension principale, et les perforations de déchirure (24) s'étendant au moins sensiblement sur toute la longueur d'extension principale (26) de l'unité pliable (12),
l'emballage extérieur (14) comprenant au moins deux segments pliables (28), **caractérisé en ce que** les au moins deux bandes adhésives (20) sont agencées sur différents segments pliables (28) de l'emballage extérieur (14) et les au moins deux bandes adhésives (20) sont agencées sur différents côtés de l'emballage extérieur (14) lorsque l'unité pliable (12) est en état d'utilisation.

2. Dispositif (10) d'emballage de balai d'essuie-glace selon la revendication 1, **caractérisé en ce que** le segment pliable (22), délimité par au moins deux perforations d'arrachage (24), présente une longueur d'extension principale (26) supérieure au bord de contact avec les segments pliables (28) adjacents parallèlement à l'axe d'extension principale, et des bords extérieurs (30) au moins partiellement arrondis.

3. Dispositif (10) d'emballage de balai d'essuie-glace selon l'une des revendications précédentes, **caractérisé en ce qu'**au moins une perforation de déchirure (24) est en outre conçue sous forme d'un axe de pliage (32) de l'emballage extérieur (14).

4. Dispositif (10) d'emballage de balai d'essuie-glace selon la revendication 3, **caractérisé en ce que** ledit au moins un axe de pliage (32), qui est en outre conçu sous forme de perforations de déchirure (24), est agencé entre les bandes adhésives (20) sur l'emballage extérieur (14).

5. Dispositif (10) d'emballage de balai d'essuie-glace selon la revendication 1, **caractérisé en ce que** les segments pliables (28), qui présentent une bande adhésive (20), ont des longueurs de bord, parallèles à l'axe d'extension principale, qui sont différentes.

6. Dispositif (10) d'emballage de balai d'essuie-glace selon la revendication 1, **caractérisé en ce qu'**une bande adhésive (20) est agencée sur un segment pliable d'extrémité (34).

7. Dispositif (10) d'emballage de balai d'essuie-glace selon la revendication 1, **caractérisé en ce que** les segments pliables (28), qui présentent une bande adhésive (20), présentent des bords partiels (36) biseautés.

8. Système d'emballage (40) comprenant un dispositif (10) d'emballage de balai d'essuie-glace selon l'une des revendications précédentes et comprenant au moins un balai d'essuie-glace (50) qui est logé dans l'unité pliable (12) lorsque l'unité pliable (12) est utilisée.

9. Système d'emballage (40) comprenant un dispositif (10) d'emballage de balai d'essuie-glace selon la revendication 9 et au moins un élément d'étirement (38) prévu pour étirer le balai d'essuie-glace (50) en vue de son stockage dans l'unité pliable (12).
